# EUROPEAN PATENT SPECIFICATION

(11) **EP 3 393 986 B1**
(45) Date of publication and mention of the grant of the patent: **17.05.2023**
(21) Application number: 16823136.3
(22) Date of filing: 20.12.2016
(51) Int. Cl.: C03B 5/237, C01B 3/46, C03B 5/235

(54) **GLASS FURNACE WITH IMPROVED PRODUCTION RATE**
GLASSCHMELZOFEN MIT VERBESSERTER PRODUKTIONSRATE
FOUR DE VERRERIE PRÉSENTANT UN MEILLEUR TAUX DE PRODUCTION

(30) Priority: 23.12.2015 US 201562387125 P
(43) Date of publication of application: 31.10.2018
(73) Proprietor: Praxair Technology, Inc., Danbury, CT 06810 (US)
(72) Inventor: KOBAYASHI, Hisashi, Bedford NY 10506 (US)
(74) Representative: Novagraaf Group
(86) International application number: PCT/US2016/067778
(87) International publication number: WO 2017/112671

(56) References cited:
- WO-A1-2016/168099
- WO-A1-2016/168443
- WO-A1-2016/205579
- US-A- 6 113 874
- US-B1- 6 210 157
- A. GONZALEZ, E. SOLORZANO, C. LAGOS, G. LUGO, S. LAUX, K. T. WU, R. L. BELL, A. FRANCIS, H. KOBAYASHI: "Optimelt Regenerative Thermo-Chemical Heat Recovery for Oxy-Fuel Glass Furnaces", 75TH CONFERENCE ON GLASS PROBLEMS, COLUMBUS, OHIO, 3 November 2014 (2014-11-03), pages 113-120, XP055285013, DOI: 10.1002/9781119117490.ch10

## Description

### Field of the Invention

The present invention relates to industrial processes in which an enclosed furnace is operated at elevated temperature. The present invention relates particularly to furnaces for producing glass.

### Background of the Invention

Glass is customarily produced by melting glassmaking materials, by which is meant raw materials such as sand, limestone and soda ash (referred to as "batch"), and recycled pieces of glass (referred to as "cullet"), in a furnace. The glassmaking materials are typically fed at or near one end of the furnace (the "back wall") to produce a uniform stream of molten glass which can be further processed, for instance by removal of dissolved gases and bubbles ("fining"), and the molten glass leaves the furnace (typically out the "front wall") to be formed and cooled downstream of the furnace into solid products.

Melting the glassmaking materials requires establishing elevated temperatures in the furnace, to melt solid glassmaking materials and to maintain the molten glassmaking materials in the molten state in the furnace and as they pass through and out of the furnace. The elevated temperature is typically established by combusting fuel at a plurality of burners within the furnace. The fuel can be combusted with air as the source of oxygen, or in what is referred to as "oxy-fuel" combustion the fuel can be with gaseous oxidant having an oxygen content higher than that of air, as described herein.

In a glassmelting furnace the temperature of the crown will typically exhibit a peak at a location in the crown (the "hot spot") which customarily dictates the maximum operating capacity of the furnace to produce glass, as the maximum furnace production rate is typically limited by the maximum usable crown refractory temperature. Attempts to increase the output of a glassmelting furnace by melting more glass, i.e. by charging more batch and cullet materials into the glass furnace, are believed to require increasing the fuel input to the furnace in order to provide the necessary additional heat and to maintain a proper temperature profile in the molten glass bath. However, as the fuel input is increased to produce more glass, the crown temperature will increase. This is not a practical solution because when increasing the combustion will increase the crown hot spot and because when the crown hot spot temperature is already at or near its maximum that can be tolerated by the crown, the firing rate cannot be increased further near the hot spot without risking damage to the crown. In order to increase the production rate without increasing the temperature at the hot spot, other methods such as electric boosting (direct molten glass electrical heating by submerged electrodes) and batch and cullet preheating are sometimes used. These methods, however, incur high capital costs and high operating costs.

In oxy-fuel fired furnaces and fuel-air fired furnaces the flue port is typically located in the back wall or in the side wall near the back wall, i.e., in the relatively coldest region of the furnace. The reason for locating the flue port in the coldest region of the furnace is to minimize the sensible heat loss of flue gas leaving the furnace. One might expect that additional air-fuel or oxy-fuel burners could be located in that zone to provide the additional heat that is required for melting additional glassmaking material that is fed to the furnace. However, the present inventors have found that when the firing rate in the feed zone is increased with air-fuel or oxy-fuel combustion, the temperature of the flue gas leaving the furnace increases sharply and the energy consumption to produce molten glass increases sharply. In addition, the heat flux from such added burners would be expected to increase the temperature in other regions of the furnace including at the "hot spot" of the crown by the radiative heat exchanges taking place within the furnace. In order to maintain the hot spot temperature below the safe limit, the firing rate near the hot spot has to be reduced. A reduction in the hot the firing rate near the hot spot has to be made up by increasing the firing rate in the feed zone which further increases the flue gas temperature. Furthermore it is generally believed that the proper longitudinal crown temperature profile is essential to produce good quality glass and increasing the charge zone temperature without increasing the hot spot temperature is hitherto considered to adversely affect the glass quality.

Thus, it is to be expected that providing burners in the zone of the glassmelting furnace near the back wall, into which the glassmaking material is fed, is not a practical option to increase the glassmaking capacity of the furnace.

The article "Optimelt regenerative thermo-chemical heat recovery for oxy-fuel glass furnaces" by A. Gonzalez et al. 75th Conference on Glass Problems, Columbus, Ohio, Nov. 3-6, p. 113-120, relates to a method of producing molten glass in an end-fired tank furnace including alternating use of regenerators for preheating and cooling the off-gas, wherein part of the off-gas is recycled back to the bottom of the preheated regenerator, mixed with fuel and reacted endothermically to syngas. US 6,210,157 B1 relates to a similar method, wherein oxy-fuel fining is used, however, without recycling the off-gas. US 6,113,874 relates to a similar method including oxy-fuel fining and recycling of the off-gas.

### Brief Summary of the Invention

The present inventors have discovered that, contrary to what would be expected, combustion can be provided in the zone near the back wall of the furnace without increasing the hot spot temperature of the crown of the furnace, and permitting increased production of good quality glass from the furnace.

This discovery is a method of producing molten glass as defined in claim 1.

In the foregoing embodiments the combustion is preferably carried out under conditions wherein the combustion in the furnace of the syngas from the first and second regenerators maintains the temperature of the crown in the feed zone at within 75 C, and more preferably within 50C, of the highest temperature of the crown in the furnace outside of the feed zone.

In other preferred embodiments, the thermochemical regenerator ports are located in the back wall and the visible flame length is less than two thirds, or even less than one half, of the longitudinal length of the furnace.

As used herein, "glassmaking materials" comprise any of the following materials, and mixtures thereof: sand (mostly SiO₂), soda ash (mostly Na₂CO₃), limestone (mostly CaCO₃ and MgCO₃), feldspar, borax (hydrated sodium borate), other oxides, hydroxides and/or silicates of sodium and potassium, which materials are also referred to as "batch", and glass (such as recycled solid pieces of glass) previously produced by melting and solidifying any of the foregoing, which is also referred to as "cullet". Glassmaking materials may also include functional additives such as batch oxidizers such as salt cake (sodium sulfate, Na₂SO₄) and/or niter (sodium nitrate, NaNO_{3,} and/or potassium nitrate, KNO₃), and fining agents such as antimony oxides (Sb₂O₃).

As used herein, "oxy-fuel burner" means a burner through which are fed fuel and oxidant having an oxygen content greater than the oxygen content of air, and preferably having an oxygen content of at least 50 volume percent and preferably at least 80 vol.% oxygen, more preferably at least 90 vol.% oxygen, and even at least 99 vol.% oxygen.

As used herein, "oxy-fuel combustion" means combustion of fuel with oxidant having an oxygen content greater than the oxygen content of air, and preferably having an oxygen content of at least 50 volume percent and preferably at least 80 vol.% oxygen, more preferably at least 90 vol.% oxygen, and even at least 99 vol.% oxygen.

As used herein, "air-fuel burner" means a burner through which are fed fuel and air and includes a regenerative air combustion system that preheat combustion air in regenerators.

As used herein, "air-fuel combustion" means combustion of fuel with air.

### Brief Description of the Drawings

Figures 1A, 1B, 1C, 1D and 1E are top views of five different embodiments of the interior of a glass furnace with which the present invention can be practiced.
Figure 2 is a top view of the interior of one embodiment of a glass furnace with thermochemical regenerators in an end-fired configuration, showing additional details with which the thermochemical regeneration can be practiced.
Figures 3-4 are schematic representations of different aspects of the process of the present invention to practice the thermochemical regenerator and heat recovery operation.
Figure 5 is a schematic representation of an alternative embodiment of a glass furnace with thermochemical regenerators in an end-fired configuration, showing additional details with which the alternative embodiment can be practiced.

### Detailed Description of the Invention

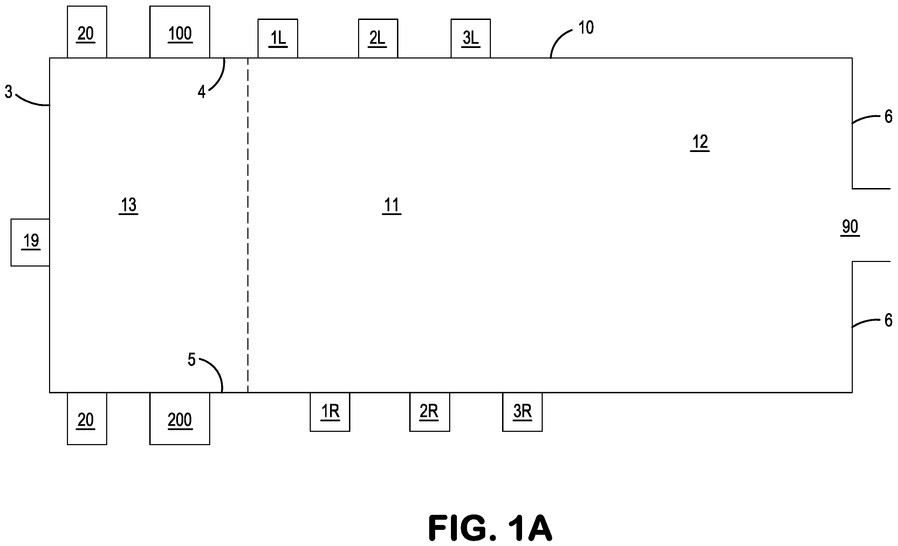

Turning first to the glassmaking furnace itself, Figure 1A shows a top plan view of a typical cross fired float glass furnace (10), with which the present invention can be practiced. The present invention is not limited to float glass furnaces and can be practiced in other types of glass melting furnaces manufacturing, for example, tableware glasses, sheet glasses, display glasses, and container glasses. The furnace (10) includes melting zone (11) and refining zone (12) (also referred to herein as fining zone (12)). Melting zone (11) and refining zone (12) are enclosed within back wall (3), front wall (6), and side walls (4) and (5). A crown or roof (not depicted) connects to side walls (4) and (5), back wall (3), and front wall (6). The furnace (10) also has a bottom which together with back wall (3), side walls (4) and (5), and front wall (6) and the crown or roof, form the enclosure that holds the molten glassmaking materials. The flow of molten glassmaking materials out of an opening in furnace (10) is represented as (90).

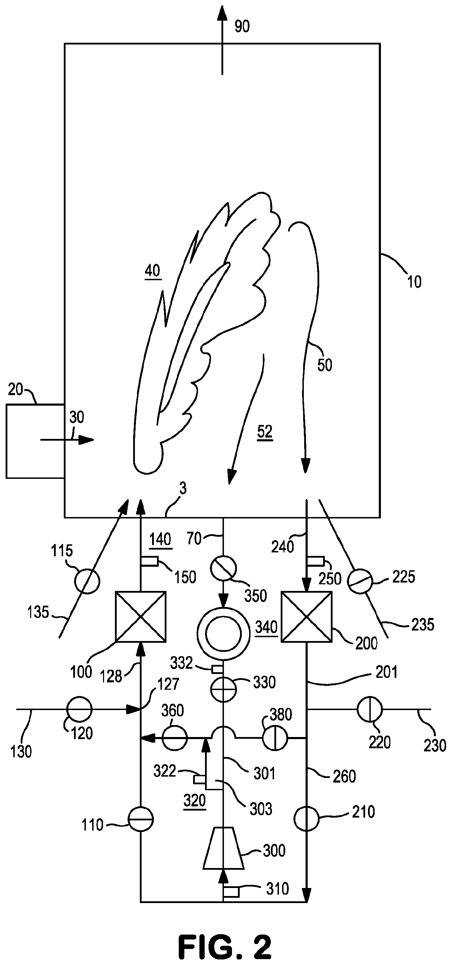

The furnace (10) also has at least one material charging entrance (20), typically along the inner surface of back wall (3) or in side walls (4) and/or (5) near back wall (3) for other types of glass furnaces, through which glassmaking material (30) can be fed into the melting zone (11) as seen in Figure 2. More specifically, glassmaking material is fed into feed zone (13) which is considered to be part of melting zone (11) and which extends from back wall (3) up to 30% of the length from back wall (3) to front wall (6). There can also be one or more flues (19) through which products of the combustion of fuel and oxygen within melting zone (11) can flow out of the interior of the furnace. The flue or flues are typically located in back wall (3), or in one or both side walls.

The bottom, back wall, front wall, sides and crown of the furnace should be made from refractory material that can retain its solid structural integrity at the temperatures to which it will be exposed, i.e. typically 1300°C to 1700°C. Such materials are widely known in the field of construction of high-temperature apparatus. Examples include silica, fused alumina, and AZS.

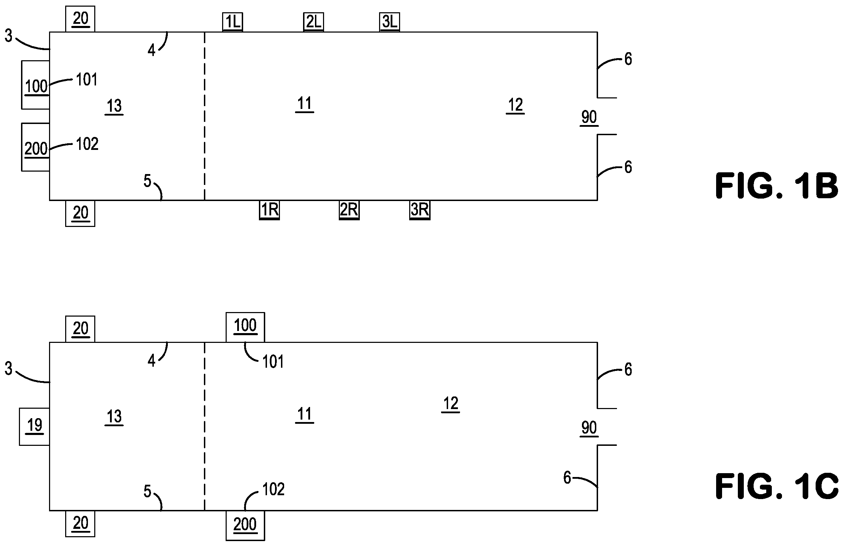

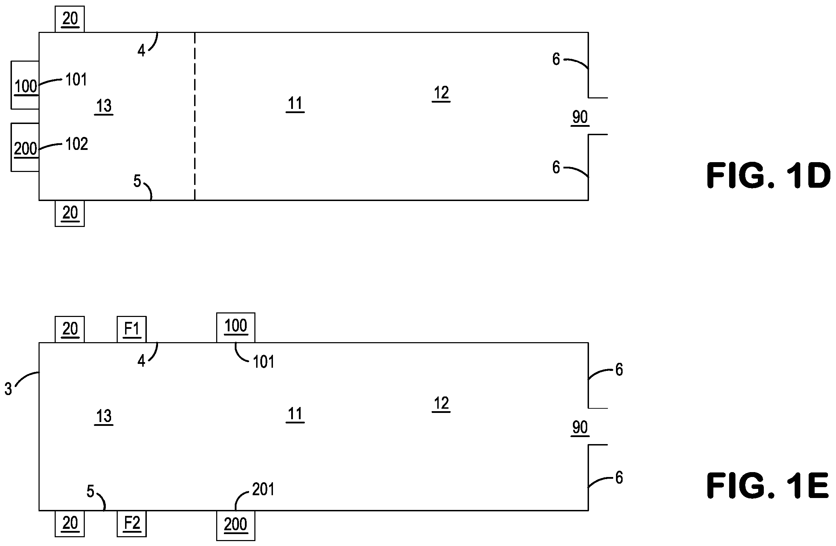

In the embodiments shown in Figures 1C and 1D, melting zone (11) does not have any burners or optionally as shown in Figures 1A and 1B melting zone (11) includes one or more pairs of opposed air-fuel burners and/or oxy-fuel burners, which can be regenerator ports, with at least one burner in each of side walls (4) and (5). By "opposed" is meant that in a given pair of burners or regenerator ports, there is one port in each side wall, facing each other and both facing the interior of melting zone (11). The opposed ports can be essentially coaxial, that is they face directly across from each other, or they can be offset, wherein the axis of each port in one side wall is not coaxial with the axis of any port in the opposing side wall, as shown in the example in Figure 1A.

When optional burners are installed in melting zone (11) combustion occurs in melting zone (11) as fuel such as natural gas or fuel oil, injected at or near the locations where these ports open into melting zone (11), mixes with hot combustion air or oxidant to form a flame and to generate heat in the melting zone to melt glassmaking material and maintain the glassmaking material in the molten state. Combustion can occur simultaneously at all ports, or as in the case with regenerative burners combustion can occur alternately at some ports and then at some other ports. Figures 1A and 1B show optional three pairs of ports, the ports on one side of the melting zone being numbered 1L, 2L and 3L and the ports on the other side of the melting zone being numbered 1R, 2R and 3R. Any number of ports or burners can be employed, from 2 to 10 or even up to 20 or more, depending on the desired glassmelting capacity of the furnace.

Removing gas bubbles from molten glass is an essential requirement in glass melting furnace to produce good quality glass. Molten glass must remain in the furnace for a sufficient time to allow gas bubbles to leave the glass through buoyancy, a process known as fining. In a glass melting furnace the operating condition of the furnace is typically controlled by monitoring crown thermocouples and tank bottom thermocouples. A state-of-the art container glass furnace with high production rate, employing already known operation technique not incorporating the present invention, may operate at a hot spot crown temperature of 1550 to 1600 C located at about two-thirds to three-fourths of the longitudinal length of the furnace from the back wall. Batch materials are charged near the back wall and the crown temperature near the back wall may operate 100 to 200 C below the hot spot temperature or typically at about 1400 to 1450 C. The crown temperature in fining zone (12) near the front wall may operate about 50 C below the hot spot temperature. Batch materials fed from batch charger (20) (Figure 2) float over the molten glass bath as discrete "islands" and move toward the front wall as they are being heated and melted by flames in the melting zone (11). Molten glass under the floating batch islands flows toward the back wall from the hot spot of the furnace. The balance of the forward moving batch islands and the backward moving molten glass underneath forms a so-called "batch line' which divides melting zone (11) from fining zone (12) and it is typically located near the hot spot. In fining zone (12) no batch islands are floating over the molten glass to ensure good glass quality. Since the molten glass longitudinal circulation pattern is known to be driven by the molten glass temperature gradient, maintaining a proper longitudinal crown temperature profile is generally considered essential to produce good quality glass. It is important to maintain the batch line within a certain longitudinal location of the furnace. For example US

Patents Nos. 4,473,388 and 5,116,399 teach the use of oxy-fuel flames aiming at or near the batch line to maintain the location of the batch line. However, the batch line is typically located near the hot spot of the furnace and firing more fuel near the hot spot will increase the crown temperature. Thus, it is not possible to use such a method if the furnace already operates at the maximum hot spot crown temperature. Since the temperature in the largely batch covered zone of the furnace, i.e, feed zone (13), is much cooler than the hot spot crown temperature, it is possible to increase the fuel firing rate in this zone without exceeding the maximum refractory temperature limit of the crown in this zone. However increasing the temperature of feed zone (13) is generally considered to weaken the backward recirculation flow of molten glass and adversely affect the quality of glass. Furthermore increasing the fuel firing zone in the feed zone increases the flue gas temperature at the flue port located in the feed zone, increasing the sensible heat loss.

In Figures 1A, 1B, 1C, 1D and 1E, (100) and (200) designate regenerators and (101) and (102) designate ports that are connected to furnace (10) which are used in the thermochemical regenerator and heat recovery and reuse ("TCR") operation described herein. As shown in Figures 1A and 1C, regenerators (100) and (200) can be positioned so that one is in each side wall. In such configurations, each such regenerator opens into feed zone (13), and there is no air-fuel burner or regenerator port between back wall (3) and either of regenerators (100) and (200). Optionally, oxy-fuel burners can be present in the side walls between regenerators (100) and (200) and the back wall. Figure 1E shows such an embodiment, wherein oxy-fuel burner (F1) is between regenerator (100) and the back wall, and oxy-fuel burner (F2) is between regenerator (200) and the back wall. As shown in Figures 1B and 1D, regenerators (100) and (200) can be positioned so that they are both in back wall (3).

Figure 2 illustrates in more details the embodiment known as the end-port firing configuration in which regenerators (100) and (200) used in the TCR operation are both located in back wall (3). The operation is described in more detail with reference to Figures 2-4. These details are also employed when the regenerators (100) and (200) are located in side walls (4) and (5) of the furnace.

This aspect of the overall process proceeds in two cycles, which are referred to herein as the flue cycle and the reforming cycle. These two cycles are performed alternatingly in two or more checker-filled regenerators. This process is preferably carried out in association with oxy-fuel combustion, because the flue gases produced by oxy-fuel combustion have higher H2O and CO2 concentrations, both of which promote the endothermic reforming reactions that are utilized in the method of this invention. When this process is carried out in the cross-fired configuration with air burners (shown in Figures 1A and 1B), flue gas from the air-fuel burners containing high nitrogen concentration mixes with the oxy-fuel fired TCR flue gas and dilutes the concentration of H2O and CO2 in the flue gas entering the regenerator in the flue cycle. If the total concentration of H2O and CO2 in the flue gas is below 50 vol.%, a separate stream of gases containing a high H2O and/or CO2 is preferably used for the endothermic reforming reactions. (Although RFG as defined herein, with total concentration of H2O and CO2 as low as 30 vol.% may still work.) During the flue cycle, the checkers in a first regenerator extract and store heat from a high temperature flue gas which is fed from the furnace into and through this regenerator. Then, in the reforming cycle, from the cooled flue gas that exits the first regenerator, a portion (which is referred to herein as Recycled Flue Gas or RFG) is fed into another (second) regenerator and mixed with a stream of fuel (referred to herein as Reforming Fuel or RF). In the following description, pure methane (CH4) is described as reforming fuel and RFG is described as reforming reactants for purposes of illustration. Other satisfactory fuels include any combustible gas, gas mixture, or vaporized liquid fuels including, but not limited to, natural gas, propane, and LPG (liquefied petroleum gas). Other satisfactory reforming reactants include any gas mixture containing more than 50 vol % of H2O and CO2, including, but not limited to, steam generated from a boiler.

In the reforming cycle, the RFG/Reforming Fuel mixture enters the second regenerator in which the checker has already been heated, as described herein, and flows through it towards the furnace. The temperature of the RFG/RF mixture passing through the second regenerator continues to increase by extracting heat from the already pre-heated checker. As the RGF/RF mixture passes through the second regenerator, it reaches a temperature at which reforming reactions begin to occur and continue to occur, producing products including H2 and CO. The reforming reactions are endothermic and the heat needed to promote the reforming reactions is absorbed from the heated checker. The gaseous composition that is produced by the reforming reactions typically comprises one or more components such as such as H2, CO, unreacted gases comprising H2O, CO2, CH4, nitrogen, any residual NOx, and soot. The gaseous composition thus produced may also be called "syngas" herein. The syngas emerges from the second regenerator into the furnace and is combusted in the furnace with oxidant to provide thermal energy for heating and/or melting material in the furnace.

After a length of time, the operation of the two regenerators is reversed, i.e., the regenerator that was used in the flue cycle is switched to the reforming cycle, and the regenerator that was used in the reforming cycle is switched to the flue cycle. After a further period of time, the operation of the two regenerators is reversed again. The timing of the reversals can be determined by elapsed time, or by other criteria such as the temperature of the flue gas exiting from the first regenerator that is in flue cycle. The reversal process is carried out according to a predetermined mechanism and plan, wherein valves are sequenced to open and close based on specific timings.

The operation and control of this aspect of the present invention is described below in conjunction with Figs. 2 to 4, in which glass furnace (10) is fitted with two regenerators (100) and (200) in back wall (3).

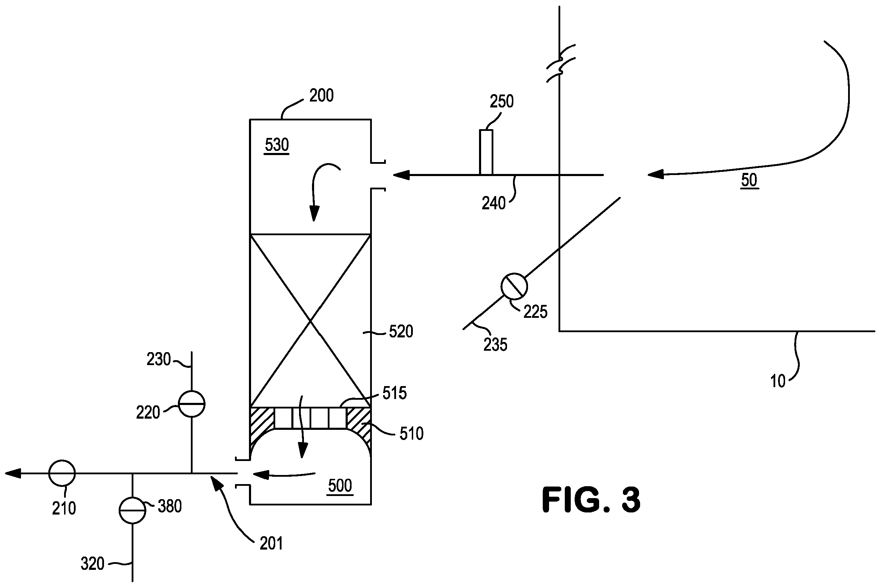

As shown in Fig. 2, glass furnace (10) has a feed station (20) where feed material (30) comprising solid glassmaking materials (batch and/or cullet) are charged into the furnace to be heated and melted. The furnace (10) is equipped with first regenerator (100) on the furnace left side and second regenerator (200) on the furnace right side. Vertical cross-sectional views of the two regenerators are displayed in more detail in Figs. 2 and 3.

As seen in Fig. 3, regenerator (200) is in the flue cycle wherein flue gas stream (50) from the interior of furnace (10) enters port neck (240) and then flows to the top space (530) of regenerator (200) past an oxygen analyzer (250). The flue gas stream heats checkers (represented as (520)) as it flows through passages between the checkers within regenerator (200), and enters chamber bottom space (500) through gas passages (515) supported on arch (510) which also supports the weight of the whole bed of checkers. As seen in Fig. 2, a portion (52) of the flue gases produced in furnace (10) may be by-passed to conduit (70) through a partially opened valve (350) then enters stack (340) to exhaust, by which is meant that it does not re-enter the furnace but instead is discharged to the atmosphere and/or conveyed to one or more other stations for storage and/or further treatment or any combination of such destinations. For maximum heat recovery, it is preferred that valve (350) is closed so that essentially all the furnace flue gas goes to regenerator (200) as flue gas stream (50).

As seen in Figs. 2 and 3, the cooled flue gas stream (201) exits the regenerator (200) in conduit (260), passes through an open valve (210) and oxygen sensor (310), and then enters the suction-side of blower (300). The majority of the flue gas (301) leaving the pressure-side of the blower passes through a damper (330) then a flow meter (332), and finally is directed into stack (340) through which this flue gas leaves the system to exhaust as defined herein. A portion (303) of the flue gas is recycled to the bottom of regenerator (100) by passing through conduit (320) and valve (360). This is Recycled Flue Gas (RFG). Its flow is metered by a flow meter (322). Reforming fuel which is to be fed to the second regenerator (100) is supplied by a conduit (130) through valve (120).

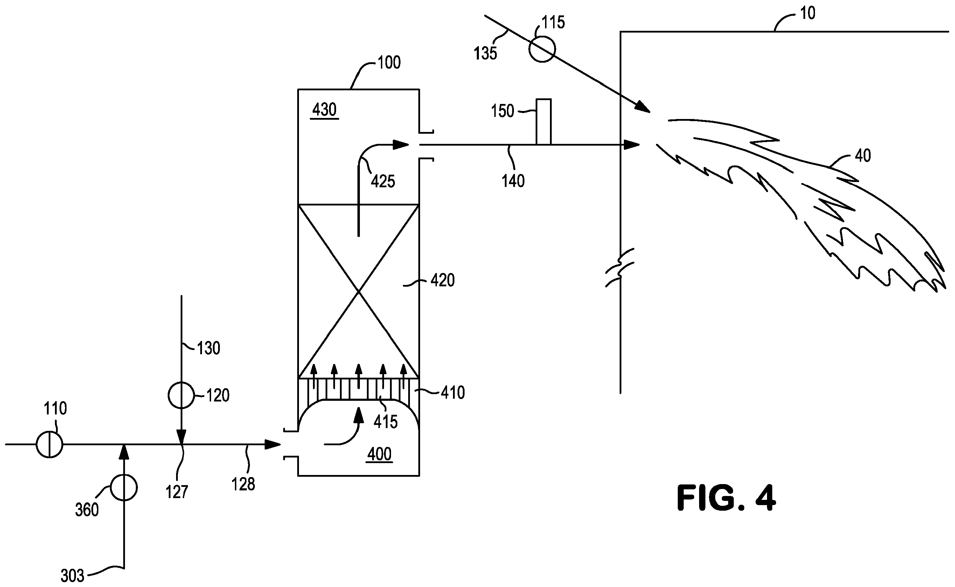

As seen in Fig. 4, the reforming fuel (RF) from stream (130) intersects and mixes with the RFG (303) at location (127) in conduit (128) which also communicates with the bottom space (400) of regenerator (100). This RFG/RF mixture enters the already pre-heated checker pack (420) of regenerator (100) through gas passages (415) on arch (410). Regenerator (100) has already been heated in a previous cycle by passage of flue gas from the furnace into and through the regenerator (100). The temperature of the RFG/RF mixture increases as it flows through the checker pack of regenerator (100). When the temperature of the RFG/RF reaches reforming temperature, endothermic reforming reactions occur in which the reforming fuel (e.g. CH4) reacts with CO2 and H2O in the RFG and forms CO, H2, and some soot. The required heat for the endothermic reforming reactions is taken from the heated checkers. The reforming reaction continues as the RFG/RF mixture continues to travel toward the top space (430). The gaseous stream (425) (referred to herein as a "reformed" or "syngas" gas stream) exits from the top of checker pack (420). Stream (425) has high temperature and includes species such as CO, H2, soot, unreacted CH4, and unreacted CO2 and H2O. The syngas stream (425) passes through port neck (140) and oxygen sensor (150), and enters furnace (10). The syngas stream exits checker pack (420) at temperatures for example ranging from 1800 F to 2500 F. This syngas is combusted in the furnace (10) represented as flame (40) to generate additional heat of combustion useful for heating and/or melting material in the furnace, such as glassmaking materials. Oxidant required for combustion of the syngas is supplied by a conduit (135) through opened valve (115). This oxidant can be air, or it can have an oxygen content higher than that of air, i.e. at least 21 vol.%, and preferably equal to or higher than 80 vol.%, more preferably equal to or higher than 90 vol.%, or even at least 99 vol.%.

Typically, the heat recovery process proceeds with one regenerator in the flue cycle and one regenerator in the reforming cycle, as seen in Fig. 2, for about 20 to 40 minutes or until the checkers in the reforming regenerator are too cold to provide sufficient heat to promote the desired endothermic chemical reactions. At that point, and now continuing with the description herein where regenerator (200) was in the flue cycle and regenerator (100) was in the reforming cycle, furnace (10) undergoes reversal in which regenerator (200) is transitioned to the reforming cycle for heat recovery and regenerator (100) is transitioned into the flue cycle for heat accumulation. Before the reversal, remaining syngas in regenerator (100) is to be purged to furnace (10). In this instance, reforming fuel supplied to the regenerator is terminated at first by closing valve (120) while letting the flow of RFG from blower (300) continue. Remaining syngas in regenerator (100) is purged by the RFG for a specified amount of time so that nearly all the syngas in the regenerator is expelled to the furnace and combusted to completion.

Upon reversal, the flue gas from the furnace passes through regenerator (100), and a portion thereof passes to exhaust (as defined herein) while a portion or the balance is mixed with fuel and the mixture is passed through regenerator (200) and into the furnace. Valve (110) which had been closed is opened, valve (210) is closed, and valve (360) is closed and valve (380) is opened, to permit heated flue gas to pass from regenerator (100) toward and through blower (300), and to permit a portion (303) of this flue gas to pass into regenerator (200) after it is mixed with reforming fuel (230) which enters through valve (220) which had been closed but now is opened. Valve (115) which had been open is closed, and as no combustion aided by oxidant through valve (115) occurs in this phase, and valve (225) is opened. The resulting mixture of reforming fuel and recycled flue gas undergoes in regenerator (200) the endothermic reactions which had occurred in regenerator (100) in the previous cycle as described herein, to produce syngas (425) which passes into furnace (10) where it is combusted with oxidant (235) that is fed through valve (225).

The amount of the flue gas emerging through the regenerator in which it was cooled, that is recycled to the other regenerator for reforming, can be adapted to the particular furnace and the particular characteristics of the flue gas, but it can be said that typically up to about 40% (by volume), and preferably about 6% to 27%, of the flue gas that emerges from the regenerator that is operating in the flue cycle is recycled to be fed into and through the regenerator that is operating in the reforming cycle.

While any ratio of RFG to FG in forming the gas stream that is fed into the regenerator that is operating in the reforming cycle can be utilized effectively in the method of this invention, a preferred ratio of RFG to FG (by volume) is 0.5 to 2.0.

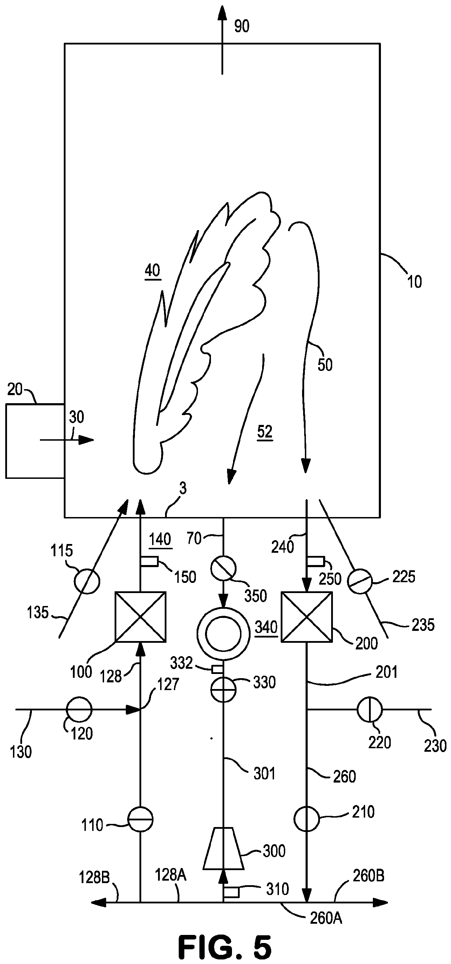

In an alternative embodiment of this invention, RFG fed alternatingly from one of the thermochemical regenerators to the other, can be replaced with a separate reforming reactants stream containing more than 50 vol. % H2O and CO2, including, but not limited to, steam. This embodiment is described with reference to Figure 5, in which reference numerals that also appear in Figures 2, 3 and/or 4 have the meanings ascribed to them in the foregoing description of Figures 2, 3 and 4.

Referring to Figure 5, gaseous combustion products (260) exiting regenerator (200) (and alternatingly, gaseous combustion products exiting regenerator (100)) are not passed into the other regenerator. Thus, stream (303) and the stream that passes through valves (360) and (380) in Figure 2, do not need to be present. Instead, stream (260) can pass as stream (260A) to exhaust, or as stream (260B) to another destination where it is collected or subjected to further chemical processing, or both. Similarly, in the cycle when flue gas is passed from furnace (10) through regenerator (100) to heat regenerator (100), the stream would be (128) in Figure 5 can pass as stream (128A) to exhaust, as stream (128) to other collection or processing, or both.

In the embodiment of Figure 5, streams comprising reforming fuel and reforming reactants are fed alternately as stream (130) into heated regenerator (100), through valve (120) which is open with valve (220) being closed, and then in the other cycle valve (220) is opened, valve (120) is closed, and stream (230) is fed into heated regenerator (200). Suitable reforming reactants comprise more than 30 vol.%, preferably more than 50 vol.%, and more preferably more than 70 vol.% H2O and/or CO2 (combined) and may also comprise one or more of nitrogen, argon, carbon monoxide, hydrogen, and /or methane.

The reforming fuel and reforming reactants undergo reforming reactions in each of the heated regenerators to which they are alternatingly fed, and form syngas by endothermic reaction in the heated regenerator, and the syngas is then passed into the furnace and combusted, all as is the case with respect to the embodiments described with respect to Figures 2-4.

The present invention improves on what had been considered to be established results and limitations in conventional modes of operating a glass furnace.

One critical operating condition of a glass furnace is that the temperatures within the furnace must not be so high that the materials from which the furnace is constructed are damaged. As the temperature within the furnace is typically the highest at the interior surface of the crown, it is beneficial to control operations by controlling the maximum temperature that is reached at the hottest point on the interior surface of the crown (the "hot spot").

A typical state-of-the art container glass furnace with high production rate may operate at the hot spot crown temperature of 1550C to 1600 C located at about two-thirds to three-fourths of the longitudinal length of the furnace from the back wall. The temperature in the feed zone (13) is typically 100C to 200 C less than the hot spot temperature or typically at about 1400 to 1450 C.

To increase the output of a glass furnace by charging more batch and cullet materials into the glass furnace, the fuel input to the furnace has to be increased to maintain a proper molten glass bath temperature profile. But as the fuel input is increased to produce more glass, the crown temperature will increase, and more heat is transferred from the combustion space above the molten glassmaking materials to the incoming feed of glassmaking materials and molten glass, driven by the greater temperature difference between the crown and the molten glass surface. So, when the crown hot spot temperature is already at or near its practical workable maximum, it is not possible to increase the furnace output by increasing the fuel firing rate in a way that would risk increasing the temperature of the crown its hottest spot. In theory one can increase the firing rate of the burner closest to the charge end in feed zone (13) in a cross-fired furnace to increase the heat input without significantly increasing the crown temperature at the hot spot. There are two practical limitations in this approach. First, the maximum firing rate of the burner in the cross-fired furnace is typically limited by the maximum flame length, which is the width of the furnace. When the flame length exceed the width of the furnace, the flue port refractory materials may get damaged by overheating and the flue gas temperature increases, which reduces the heat available within the furnace. Second, carry-over of fine batch materials into flue gas increases when the gas velocity of the flame increases.

It has been thought that additional heat could be provided to the glass furnace by installing and operating oxy-fuel burners or air-fuel burners at the locations designated (100) and (200) in Figures 1A and 1C and 1E, that is, in the feed zone, but this has been found to increase the flue gas temperature sharply and lead to losses of heat out the flue which as noted is typically also located at the feed zone (13). Furthermore it is generally believed that the proper longitudinal crown temperature profile is essential to produce good quality glass and increasing the feed zone temperature without increasing the hot spot temperature is hitherto considered to adversely affect the glass quality. The present invention has been unexpectedly found to avoid these drawbacks, and to provide increased output of glass without exceeding the maximum tolerable temperature at the crown, by operating the aforementioned thermochemical regenerators (100) and (200) so that the combustion of the syngas from the first and second regenerators (100) and (200) maintains the temperature of the atmosphere in the feed zone at within 100C of the highest temperature in the furnace atmosphere outside of the feed zone. This can be established and monitored by suitable temperature sensors within the furnace. A typical condition that leads to this result is to operate so that the lengths of the flames formed by combustion of the syngas emerging into the furnace from one or the other of these regenerators (such as flame (40)) is less than two-thirds of the length of the furnace, preferably less than half of that length in the end-port firing configuration of Figures 1B and 1D; or the flames from regenerators (100) and (200) in the side walls (as seen in Figures 1A and 1C and 1E) do not reach the opposing side wall in the cross-fired configuration. The lengths of the respective flames can be controlled to the desired lengths by well-known technique such as controlling the size and angle of the port from which the syngas flows out of the regenerators into the furnace and controlling the velocity, angle, number and locations of the oxidant streams injected into the furnace. Typical flow rates for this result in the cross fired configuration are 3,000 SCFH to 100,000 SCFH (syngas) and 2,000 SCFH to 60,000 SCFH (oxidant).

Without intending to be bound by a particular explanation for these unexpected findings, it is believed that the syngas combustion flame produced under the TCR operation has a significantly higher adiabatic flame temperature than the normal adiabatic flame temperature of ambient temperature natural gas and oxygen combustion, because the syngas from TCR has a higher hydrogen concentration and a high preheat temperature of about 1100 to 1300 C. In the configuration of Figure 2, most of the combustion heat is released in the region of the furnace closer to the back wall, and as a result the peak crown temperature is shifted toward the back wall of the furnace and the temperature difference between the crown hot spot and the crown near the back wall is reduced from 130 C for a conventional oxy-fuel fired glass furnace to about 50 C for a furnace employing the heat recovery thermochemical regeneration described herein. Thus, the temperature difference between the crown hot spot and the crown near the back wall can be controlled by the TCR operation below 100 C, or below 75 C or even below 50 C by controlling the firing rate and the flame length of the flame from TCR.

In a conventional oxy-fuel fired glass furnace without the TCR aspect of the present invention, when the firing rate is increased, it also increases the flue gas temperature leaving the furnace and the energy consumption to produce molten glass increases sharply. This problem of increasing energy consumption per unit of glass produced is solved by incorporating the (TCR) thermochemical regeneration and combustion process of this invention to efficiently recover the increased waste heat in the flue gas. That is, it has been discovered that TCR has a unique characteristic in that the efficiency of heat recovery increases as the temperature of the flue gas increases. In a conventional air heating regenerator the heat recovery efficiency (% of waste heat recovered as preheat energy transferred to combustion air) remains approximately the same when the flue gas temperature increases. The temperature of the cooled flue gas after the regenerator goes up as the hot flue gas temperature entering the regenerator increases. By contrast, in the TCR heat recovery process employed in the present invention the heat recovery efficiency increases when the flue gas temperature is increased and the temperature of the cooled flue gas after the regenerator increases little as the hot flue gas temperature entering the regenerator increases. The reason for this unique characteristic is believed to be that heat stored in the regenerator is partly recovered through the endothermic chemical reactions that form the syngas. The rate of endothermic chemical reaction becomes significant at above 1500 F and exponentially increases with temperature. When the flue gas temperature entering a TCR regenerator bed (100) or (200) is increased, more heat is stored in the higher temperature zone of the bed and more endothermic reactions occur during the heat recovery cycle to recover the stored heat in the high temperature zone. The resulting hot syngas from the regenerator contains more energy and produces a hotter flame which releases more energy near the feed zone, promoting more rapid melting of charged materials.

This permits the temperature in the feed zone to be increased without increasing the maximum temperature that is exhibited at the hot spot of the furnace.

Thus, the present invention provides an improved furnace operating method to increase the specific production rate of an oxy-fuel fired glass furnace or an air-fuel fired furnace in a cross-fired configuration by increasing the temperature in the feed zone near the back wall by the intense heat from the flame produced by combustion of high temperature preheated syngas and oxygen, without increasing the hot spot temperature while maintaining a good specific energy consumption, by employing the thermochemical regenerator operation described herein and oxy-fuel combustion. In this way, good quality glass can be produce even when the crown temperature profile is flattened (that is, a high crown temperature is maintained over a longer extent of the crown) by increasing the syngas firing rate near the back wall while charging more batch/cullet materials.

This observed phenomenon is shown by computer modeling studies to be consistent with floating batch material over the molten glass in the feed zone of the furnace insulating the molten glass below the floating batch islands from the intense radiation heat from the combustion space above and keeping the molten glass temperature colder than the molten glass temperature near the hot spot. Since the backward circulation flow of the molten glass from the hot spot toward the back wall is driven by the molten glass temperature difference between the hot spot and the back wall, a good backward circulation flow is maintained in spite of a flatter crown temperature profile. As additional relatively cold batch material is charged near the back wall, it cools the molten glass circulating in this zone and helps to maintain a sufficient temperature gradient to produce the required recirculating flow of molten glass from the hot spot of the furnace.

## Claims

1. A method of producing molten glass, comprising
(A) feeding glassmaking material (30) into a glassmelting furnace (10) having a back wall (3), a front wall (6), and a pair of side walls (4, 5) facing each other and each extending from the back wall to the front wall, and a crown, wherein the glassmaking material is fed into a feed zone (13) that extends from the back wall up to 30% of the length of the furnace from the back wall toward the front wall,
wherein no burners are located in side walls or at least one oxy-fuel or air-fuel burner is located in each side wall to provide heat to glassmaking material in the furnace by combustion at each of said burners,
wherein said furnace includes a first regenerator and a second regenerator each having a port (101, 201) opening into said feed zone and (i) said first regenerator port is located in one side wall and said second regenerator port is located in the other side wall, and no air-fuel burner is located between either of said regenerator ports and the back wall, or (ii) said first and second regenerator ports are located in the back wall; while
(B) combusting fuel in said furnace at said burners that are present, and
(C) alternately
(1) passing gaseous combustion products from the furnace into and through a cooled first regenerator to heat the first regenerator and cool said gaseous combustion products, and passing gaseous reforming reactants into a heated second regenerator and, in the second regenerator, reacting the gaseous reforming reactants and the fuel in an endothermic reaction to form syngas comprising hydrogen and CO, and passing said syngas from the second regenerator into the feed zone and combusting it in the feed zone, and
(2) passing gaseous combustion products from the furnace into and through a cooled second regenerator to heat the second regenerator and cool said gaseous combustion products, and passing gaseous reforming reactants into a heated first regenerator and, in the first regenerator, reacting the gaseous reforming reactants and the fuel in an endothermic reaction to form syngas comprising hydrogen and CO, and passing said syngas from the first regenerator into the feed zone and combusting it in the feed zone,
while maintaining conditions wherein the combustion in the furnace of the syngas from the first and second regenerators maintains the temperature of the crown in the feed zone at within 100°C of the highest temperature of the crown in the furnace outside of the feed zone, wherein said conditions in the alternative (i) include that the flames from the regenerators do not reach the opposing side wall and wherein said conditions in the alternative (ii) include that the visible length of the flames from the regenerator ports is less than two thirds of the longitudinal length of the furnace from the back wall to the front wall, so as to maintain the temperature of the atmosphere in the feed zone at within 100°C of the highest temperature in the furnace atmosphere outside of the feed zone.

2. A method according to claim 1 wherein the combustion in the furnace (10) of the syngas from the first and second regenerators is carried out under conditions that maintain the temperature of the crown in the feed zone at within 75 °C of the highest temperature of the crown in the furnace outside of the feed zone (13).

3. A method according to claim 1 wherein the combustion in the furnace (10) of the syngas from the first and second regenerators is carried out under conditions that maintain the temperature of the crown in the feed zone (13) at within 50 C of the highest temperature of the crown in the furnace outside of the feed zone.

4. A method according to claim 1 wherein in the alternative (ii) the visible flame length is less than one half of the longitudinal length of the furnace (10) from the back wall (3) to the front wall (6).

5. A method according to claim 1 wherein in the alternative (i) at least one air-fuel burner is located in each side wall (4, 5).

## Patentansprüche

1. Verfahren zum Produzieren von geschmolzenem Glas, umfassend
(A) Zuführen von Glasherstellungsmaterial (30) in einen Glasschmelzofen (10), der eine Rückwand (3), einer Vorderwand (6) und einem Paar Seitenwände (4, 5) aufweist, die einander zugewandt sind und sich jeweils von der Rückwand zu der Vorderwand erstrecken, und einer Krone, wobei das Glasherstellungsmaterial in eine Zuführzone (13) zugeführt wird, die sich von der Rückwand bis zu 30 % der Länge des Ofens von der Rückwand in Richtung der Vorderwand erstreckt,
wobei keine Brenner in Seitenwänden angeordnet sind oder mindestens ein Sauerstoffbrennstoffbrenner oder Luftbrennstoffbrenner in jeder Seitenwand angeordnet ist, um Wärme dem Glasherstellungsmaterial in dem Ofen durch Verbrennung an jedem der Brenner bereitzustellen,
wobei der Ofen einen ersten Regenerator und einen zweiten Regenerator einschließt, die jeweils einen Anschluss (101, 201) aufweisen, der sich in die Zuführzone öffnet und (i) wobei der erste Regeneratoranschluss in einer Seitenwand angeordnet ist und wobei der zweite Regeneratoranschluss in der anderen Seitenwand angeordnet ist und sich kein Luftbrennstoffbrenner zwischen einem der Regeneratoranschlüsse und der Rückwand befindet, oder (ii) wobei der erste und der zweite Regeneratoranschluss in der Rückwand angeordnet sind; während einem
(B) Verbrennen von Brennstoff in dem Ofen an den vorhandenen Brennern, und
(C) abwechselndem
(1) Leiten von gasförmigen Verbrennungsprodukten aus dem Ofen in und durch einen gekühlten ersten Regenerator hindurch, um den ersten Regenerator zu erwärmen und die gasförmigen Verbrennungsprodukte zu kühlen, und Leiten von gasförmigen Reformierungsreaktionsmitteln in einen erwärmten zweiten Regenerator und, in dem zweiten Regenerator, Reagieren der gasförmigen Reformierungsreaktionsmittel und des Brennstoffs in einer endothermen Reaktion, um Synthesegas zu bilden, umfassend Wasserstoff und CO, und Leiten des Synthesegases aus dem zweiten Regenerator in die Zuführzone und Verbrennen des Synthesegases in der Zuführzone, und
(2) Leiten von gasförmigen Verbrennungsprodukten aus dem Ofen in und durch einen gekühlten zweiten Regenerator hindurch, um den zweiten Regenerator zu erwärmen und die gasförmigen Verbrennungsprodukte zu kühlen, und Leiten von gasförmigen Reformierungsreaktionsmitteln in einen erwärmten ersten Regenerator und, in dem ersten Regenerator, Reagieren der gasförmigen Reformierungsreaktionsmittel und des Brennstoffs in einer endothermen Reaktion, um Synthesegas zu bilden, umfassend Wasserstoff und CO, und Leiten des Synthesegases aus dem ersten Regenerator in die Zuführzone und Verbrennen des Synthesegases in der Zuführzone,
während einem Beibehalten der Bedingungen, wobei die Verbrennung in dem Ofen des Synthesegases aus dem ersten und dem zweiten Regenerator die Temperatur der Krone in der Zuführzone auf innerhalb von 100 °C der höchsten Temperatur der Krone in dem Ofen außerhalb der Zuführzone beibehält, wobei die Bedingungen in der Alternative (i) einschließen, dass die Flammen aus den Regeneratoren die gegenüberliegende Seitenwand nicht erreichen und wobei die Bedingungen in der Alternative (ii) einschließen, dass die sichtbare Länge der Flammen aus den Regeneratoranschlüssen kleiner als zwei Drittel der Länge in Längsrichtung des Ofens von der Rückwand zu der Vorderwand betragen, um die Temperatur der Atmosphäre in der Zuführzone auf innerhalb von 100 °C der höchsten Temperatur in der Ofenatmosphäre außerhalb der Zuführzone beizubehalten.

2. Verfahren nach Anspruch 1, wobei die Verbrennung in dem Ofen (10) des Synthesegases aus dem ersten und dem zweiten Regenerator unter Bedingungen durchgeführt wird, welche die Temperatur der Krone in der Zuführzone auf innerhalb von 75 °C der höchsten Temperatur der Krone in dem Ofen außerhalb der Zuführzone (13) beibehalten.

3. Verfahren nach Anspruch 1, wobei die Verbrennung in dem Ofen (10) des Synthesegases aus dem ersten und dem zweiten Regenerator unter Bedingungen durchgeführt wird, welche die Temperatur der Krone in der Zuführzone (13) auf innerhalb von 50 °C der höchsten Temperatur der Krone in dem Ofen außerhalb der Zuführzone beibehalten.

4. Verfahren nach Anspruch 1, wobei in der Alternative (ii) die sichtbare Flammenlänge weniger als eine Hälfte der Länge in Längsrichtung des Ofens (10) von der Rückwand (3) zu der Vorderwand (6) beträgt.

5. Verfahren nach Anspruch 1, wobei in der Alternative (i) mindestens ein Luftbrennstoffbrenner in jeder Seitenwand (4, 5) angeordnet ist.

## Revendications

1. Procédé de production de verre fondu, comprenant
(A) l'alimentation en matériau de fabrication de verre (30) dans un four de fusion de verre (10) ayant une paroi arrière (3), une paroi avant (6) et une paire de parois latérales (4, 5) se faisant face et s'étendant chacune depuis la paroi arrière jusqu'à la paroi avant, et une couronne, le matériau de fabrication de verre étant introduit dans une zone d'alimentation (13) qui s'étend à partir de la paroi arrière jusqu'à 30 % de la longueur du four de la paroi arrière vers la paroi avant,
aucun brûleur n'étant situé dans des parois latérales ou au moins un brûleur de gaz oxygéné ou d'air-carburant étant situé dans chaque paroi latérale pour fournir de la chaleur au matériau de fabrication de verre dans le four par combustion au niveau de chacun desdits brûleurs,
ledit four comportant un premier régénérateur et un second régénérateur ayant chacun un orifice (101, 201) débouchant dans ladite zone d'alimentation et (i) ledit premier orifice de régénérateur étant situé dans une paroi latérale et ledit second orifice de régénérateur étant situé dans l'autre paroi latérale, et aucun brûleur air-carburant n'étant situé entre l'un ou l'autre desdits orifices de régénérateur et la paroi arrière, ou (ii) lesdits premier et second orifices de régénérateur étant situés dans la paroi arrière ; tandis que
(B) la combustion de combustible dans ledit four au niveau desdits brûleurs qui sont présents, et
(C) alternativement
(1) le passage de produits de combustion gazeux provenant du four dans et à travers un premier régénérateur refroidi pour chauffer le premier régénérateur et refroidir lesdits produits de combustion gazeux, et le passage de réactifs de reformage gazeux dans un second régénérateur chauffé et, dans le second régénérateur, la réaction des réactifs de reformage gazeux et du carburant dans une réaction endothermique pour former un gaz de synthèse comprenant de l'hydrogène et du CO, et le passage dudit gaz de synthèse provenant du second régénérateur dans la zone d'alimentation et la combustion de celui-ci dans la zone d'alimentation, et
(2) le passage de produits de combustion gazeux provenant du four dans et à travers un second régénérateur refroidi pour chauffer le second régénérateur et refroidir lesdits produits de combustion gazeux, et le passage de réactifs de reformage gazeux dans un premier régénérateur chauffé et, dans le premier régénérateur, la réaction des réactifs de reformage gazeux et du carburant dans une réaction endothermique pour former un gaz de synthèse comprenant de l'hydrogène et du CO, et le passage dudit gaz de synthèse provenant du premier régénérateur dans la zone d'alimentation et la combustion de celui-ci dans la zone d'alimentation,
tout en maintenant des conditions, la combustion dans le four du gaz de synthèse provenant des premier et second régénérateurs maintenant la température de la couronne dans la zone d'alimentation à moins de 100 °C de la température la plus élevée de la couronne dans le four à l'extérieur de la zone d'alimentation, lesdites conditions dans l'alternative (i) comportant que les flammes provenant des régénérateurs n'atteignent pas la paroi latérale opposée et dans lequel lesdites conditions dans l'alternative (ii) comportant que la longueur visible des flammes provenant des orifices de régénérateur est inférieure aux deux tiers de la longueur longitudinale du four de la paroi arrière vers la paroi avant, de façon à maintenir la température de l'atmosphère dans la zone d'alimentation à moins 100 °C de la température la plus élevée dans l'atmosphère de four à l'extérieur de la zone d'alimentation.

2. Procédé selon la revendication 1, dans lequel la combustion dans le four (10) du gaz de synthèse provenant des premier et second régénérateurs est réalisée dans des conditions qui maintiennent la température de la couronne dans la zone d'alimentation à 75 °C de la température la plus élevée de la couronne dans le four à l'extérieur de la zone d'alimentation (13).

3. Procédé selon la revendication 1, dans lequel la combustion dans le four (10) du gaz de synthèse provenant des premier et second régénérateurs est réalisée dans des conditions qui maintiennent la température de la couronne dans la zone d'alimentation (13) à l'intérieur de 50 °C de la température la plus élevée de la couronne dans le four à l'extérieur de la zone d'alimentation.

4. Procédé selon la revendication 1, dans lequel dans l'alternative (ii) la longueur de flamme visible est inférieure à la moitié de la longueur longitudinale du four (10) de la paroi arrière (3) à la paroi avant (6).

5. Procédé selon la revendication 1, dans lequel dans l'alternative (i) au moins un brûleur d'air-carburant est situé dans chaque paroi latérale (4, 5).
